(19) Europäisches Patentamt
European Patent Office
Office européen des brevets

(11) **EP 2 547 923 B1**

(12) **EUROPÄISCHE PATENTSCHRIFT**

(45) Veröffentlichungstag und Bekanntmachung des Hinweises auf die Patenterteilung:
**15.10.2014 Patentblatt 2014/42**

(21) Anmeldenummer: **11705552.5**

(22) Anmeldetag: **24.02.2011**

(51) Int Cl.:
*F16C 25/08* (2006.01)

(86) Internationale Anmeldenummer:
**PCT/EP2011/052715**

(87) Internationale Veröffentlichungsnummer:
**WO 2011/113672 (22.09.2011 Gazette 2011/38)**

(54) **THERMOKOMPENSATIONSELEMENT UND LAGERANORDNUNG MIT EINEM THERMOKOMPENSATIONSELEMENT**

THERMOCOMPENSATION ELEMENT AND BEARING ARRANGEMENT WITH A THERMOCOMPENSATION ELEMENT

ÉLÉMENT DE THERMOCOMPENSATION ET ENSEMBLE PALIER COMPORTANT UN ÉLÉMENT DE THERMOCOMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2010 DE 102010011444**

(43) Veröffentlichungstag der Anmeldung:
**23.01.2013 Patentblatt 2013/04**

(73) Patentinhaber: **Schaeffler Technologies GmbH & Co. KG**
**91074 Herzogenaurach (DE)**

(72) Erfinder: **SMETANA, Tomas**
**91074 Herzogenaurach (DE)**

(56) Entgegenhaltungen:
EP-A1- 0 668 448          WO-A1-2006/014934
DE-A1-102007 044 616      DE-B- 1 066 388

EP 2 547 923 B1

## Beschreibung

### Gebiet der Erfindung

Die Erfindung betrifft ein Thermokompensationselement mit wenigstens einem zwischen einem ersten Ringprofil und einem zweiten Ringprofil gekapselten Dehnelement, wobei das Material des Dehnelements wenigstens einen Wärmedehnungskoeffizienten aufweist, der größer ist als der Wärmeausdehnungskoeffizient des Materials, aus dem wenigstens eines der Ringprofile ist, und wobei die Ringprofile axial entlang einer gemeinsamen Mittelachse gegeneinander axial verschiebbar und radial aneinander geführt so ineinander stecken, dass axial ausgerichtete erste Ringwände des ersten Ringprofils zumindest teilweise zwischen axial ausgerichtete zweite Ringwände des zweiten Ringprofils greifen und dabei das Dehnelement (innen- und außenumfangsseitig) umfangsseitig zumindest teilweise von den ersten Ringwänden eingeschlossen ist.

### Hintergrund der Erfindung

In Baugruppen, die Bauteile und Maschinenelemente aus unterschiedlichen Werkstoffen aufweisen, sind aufgrund der sich unterscheidenden Wärmeausdehnungskoeffizienten der unterschiedlichen Werkstoffe bei Temperaturänderungen unterschiedliche Längenänderungen zu erwarten. Diese Längenänderungen aufgrund von Wärmedehnung sind insbesondere in Kraftfahrzeugdifferenzialen und Verteilergetrieben aber auch in anderen Getriebeanordnungen unerwünscht. Das trifft insbesondere auf die Lagerungen von Ritzelwellen und anderer Wellen mittels vorgespannter Schräglageranordnungen zu. In Schräglageranordnungen sind zwei oder mehr Schräglager in Form von Schrägkugellagern oder Kegelrollenlagern gegeneinander angestellt und spielfrei axial gegeneinander vorgespannt. In der Regel sind die Gehäuse der Getriebeanordnungen aus Aluminiumdruckguss oder Magnesiumguss und die Wellen aus Stahl. Die mehr als doppelte Wärmedehnung des Gehäuses aus einer Aluminiumlegierung gegenüber der Welle aus Stahl macht sich in der Lageranordnung unter Umständen bis zum Spiel in der ursprünglich spielfrei vorgespannten Lageranordnung bemerkbar.

Zur Kompensation dieser Spiele sind beispielsweise aus US 5, 028, 152 A sogenannte Thermokompensationselemente (TC-Elemente = TCE) bekannt. Diese TCE sind im Wesentlichen durch Ausgleichselemente in Form von ringförmigen Dehnelementen aus elastischen Kunststoff-Materialien wie Viton gebildet. Diese Werkstoffe weisen einen wesentlich höheren Wärmeausdehnungskoeffizienten auf, als die Werkstoffe des Gehäuses oder der Welle und deren Lageranordnungen.

Viton ist die Warenbezeichnung der DuPont Performance Elastomere für deren Fluorelastomere. Der Werkstoff ist relativ teuer und kann nur durch Vulkanisieren verarbeitet werden.

Der Ausdehnungskoeffizient oder Wärmeausdehnungskoeffizient ist ein Kennwert, der das Verhalten eines Stoffes bezüglich Veränderungen seiner Abmessungen bei Temperaturveränderungen beschreibt - deswegen oft auch thermischer Ausdehnungskoeffizient genannt. Der hierfür verantwortliche Effekt ist die Wärmeausdehnung. Da die Wärmeausdehnung bei vielen Stoffen nicht gleichmäßig über alle Temperaturbereiche erfolgt, ist auch der Wärmeausdehnungskoeffizient selbst temperaturabhängig und wird deshalb für eine Bezugstemperatur oder einen Temperaturbereich angegeben.

Es wird zwischen dem thermischen Längenausdehnungskoeffizienten a (auch linearer Wärmeausdehnungskoeffizient oder Wärmedehnung) und dem thermischen Raumausdehnungskoeffizienten $\gamma$ (auch räumlicher Ausdehnungskoeffizient oder Volumenausdehnungskoeffizient oder kubischer Ausdehnungskoeffizient) unterschieden. Der lineare Ausdehnungskoeffizient gibt an, um welche Längendifferenz im Verhältnis zur gesamten Länge $L_0$, sich ein fester Körper bei einer Temperaturänderung von einem Kelvin verändert. Er ist eine stoffspezifische Größe, die für einen homogen Festkörper definiert ist durch:

$$\alpha = \frac{1}{L_0} \cdot \frac{\Delta L}{\Delta T}$$

Der volumenspezifische Ausdehnungskoeffizient gibt an, um welchen Betrag im Verhältnis zum gesamten Volumen sich das Volumen eines Körpers bei einer Temperaturänderung von einem Kelvin vergrößert oder verkleinert. Anders ausgedrückt: Der volumenspezifische Ausdehnungskoeffizient beschreibt die relative Änderung des Volumens V mit der Temperatur T.

Ein TCE der gattungsbildenden Art ist in US 5, 028, 152 A bzw. EP 0 668 448 A1 beschrieben. Es ist aus einem zweiteiligen Gehäuse gebildet, in dem ein Ausgleichselement in Form eines ringförmigen Dehnelements eingekapselt ist. Das zweiteilige Gehäuse ist aus einem ersten U-förmigen Ringprofil und einem zweiten U-förmigen Ringprofil gebildet. Die Ringprofile weisen als Voraussetzung für die Funktion des TCE einen geringeren Wärmeausdehnungskoeffizienten als das Dehnelement auf und sind in der Regel aus Stahlblech.

Eines der Ringprofile ist längs verschiebbar in das andere Ringprofil gesteckt, so dass beide Mittelachsen der Profile aufeinander liegen und dementsprechend eine gemeinsame Mittelachse aufweisen. Das Ringprofil ist aus zwei konzentrischen Ringwänden und einer scheibenförmigen Platte gebildet. Ein Längsschnitt entlang der Mittelachse durch das jeweilige Profil beschreibt dieses als U-förmig. Das U, das üblicherweise durch einen Querbalken und von dem Querbalken abgehenden parallele Schenkeln gebildet wird, ist in diesem Fall so ausgerichtet, dass die Schenkel und damit die Ringwände jeweils parallel zur Mittelachse verlaufen und damit in axiale Richtung weisen. Der Boden des jeweiligen Ringprofils ist eine ringförmige (lochscheibenförmige) Platte, die radial ausgerichtet ist und längs, also in axiale Richtung weisende, Flächen bildet. An diesen Ringflächen ist das Dehnelement axial abgestützt. In einer vorgespannten Lageranordnung ist das Dehnelement axial zwischen den einander gegenüberliegenden Platten eingespannt.

Die Profile stecken zur Bildung des Gehäuses so ineinander, dass das erste Ringprofil zumindest teilweise mit seinen ersten Ringwänden und dabei mit der Öffnung voran zwischen die zweiten Ringwände des zweiten Ringprofils greift. Die Ringwände beider Ringprofile sind radial aneinander geführt und sind entlang der Mittelachse axial gegeneinander verschiebbar.

Ein Abschnitt des Dehnelements des TCE nach US 5, 028, 152 A ist radial zwischen den Ringwänden des ersten Ringprofils geführt. Ein weiterer Abschnitt steht axial aus diesem ersten Ringprofil heraus und in das zweite Ringprofil hinein. Zwischen den außen liegenden und innen liegenden zweiten Ringwänden des zweiten im Längsschnitt U-förmigen Ringprofils und dem zweiten Abschnitt des Ausgleichelements ist jeweils ein Ringspalt ausgebildet, dessen radiale Abmessung im unbelasteten Ausgangszustand des Thermokompensationselements der radialen Wanddicke der Ringwände des ersten U-förmigen Profils entspricht.

Folgen weiterer Wärmedehnung des Gehäuses, die üblicherweise zu Spiel in der Lageranordnung führten, werden durch das TCE ausgeglichen. Darüber hinaus wird aufgrund des höheren Wärmeausdehnungskoeffizienten auch die Vorspannung in der Schräglageranordnung axial durch das TCE gehalten. Die radiale Kapselung der Dehnelemente mit Gehäusen der vorher beschriebenen Gattung bewirkt am nicht verbauten TCE bzw. bei Spiel in der Lageranordnung auch am verbauten TCE, dass auch die temperaturabhängige Volumenänderung des Ausdehnungselementes sich im Wesentlichen als Änderungen der axialen Abmessung, also als Längenänderung des nicht vorgespannten TCE, bemerkbar macht. Bei Wärmedehnung verschieben sich die Ringprofile so gegeneinander, dass sich die Böden der beiden Ringprofile axial voneinander entfernen. Dabei fahren die ineinander gesteckten Ringprofile teleskopartig auseinander, was in einer Vergrößerung der axialen Abmessung des TCE resultiert. Wenn das Spiel in einer Lageranordnung ausgeglichen ist, ist das Dehnelement an weiterer Ausdehnung gehindert. Weiterer Temperaturanstieg an dem Dehnelements führt dazu, dass sich das Dehnelement in dem Gehäuse zunehmend verspannt und somit für eine Vorspannung in der Lageranordnung sorgt.

Das TCE wird in einer mit US 5, 028, 152 A beschriebenen Anordnung axial zwischen dem Gehäuse und einer Stufe eines äußeren Lagerrings eingesetzt, so dass der Boden des einen U-förmigen Ringprofils mit seiner Außenseite axial an einer Stufe des äußeren Lagerrings und der Boden des anderen Ringprofils mit seiner Außenseite in entgegengesetzter axialer Richtung an dem Gehäuse abgestützt ist. Wenn die Schräglageranordnung spielfrei vorgespannt ist das TCE ebenfalls der Vorspannkraft ausgesetzt, da sich der Lagerring über das TC-Element (Gegenlager) an dem Gehäuse abstützt.

Ein weiteres Beispiel einer denkbaren gattungsgemäßen Lageranordnung ist in DE 198 33 910 B4 beschrieben. In einem Getriebegehäuse sitzt ein TCE in einer Aussparung einer Eingangswelle eines Getriebes. Das TCE wirkt axial entweder auf einen Kolben oder auf ein Axialrollenlager ein.

## Zusammenfassung der Erfindung

Aufgabe der Erfindung ist ein kostengünstig herzustellendes TC-Element der gattungsbildenden Art zu schaffen. Darüber hinaus soll die Typenvielfalt an TCE reduziert werden. Weiterhin soll eine TC-Element geschaffen werden, das optimal an voreingestellte Vorspannungen angepasst werden kann und dessen Ausgleichscharakteristik in alle denkbaren Einbauten und Betriebszustände betriebssicher sowie mit geringen Toleranzen gewährleistet werden kann.

Die Aufgabe ist nach dem Gegenstand des Anspruchs 1 gelöst.

Das erfindungsgemäße Thermokompensationselement ist aus einem zweiteiligen Gehäuse gebildet, in dem ein Dehnelement angeordnet ist. Das zweiteilige Gehäuse ist aus einem ersten Ringprofil und einem zweiten Ringprofil gebildet. Eines der Ringprofile ist längs verschiebbar in das andere Ringprofil gesteckt, so dass beide Mittelachsen der Profile aufeinander liegen und dementsprechend eine gemeinsame Mittelachse aufweisen.

Das jeweilige Ringprofil ist aus zwei konzentrischen Ringwänden und einem Boden gebildet. Der Boden verbindet die die beiden Ringwände des jeweiligen Ringprofils radial. Ein Längsschnitt entlang der Mittelachse durch das jeweilige Ringprofil beschreibt dieses vorzugsweise als U-förmig. Das U, das üblicherweise durch einen Querbalken und von dem Querbalken abgehenden parallele Schenkeln gebildet wird, ist in diesem Fall so ausgerichtet, dass die Schenkel und damit die Ringwände hohlzylindrisch sind und damit jeweils parallel zur Mittelachse verlaufen - somit in axiale Richtung weisen.

Denkbar ist auch, dass eine oder mehrere der Ringwände radial nach innen oder außen ausgelenkt und wieder in axiale Richtung zurückgeführt sind, so wie dies beispielsweise zur Bildung von Sicken üblich ist. Darüber hinaus kann das erste der Profile umfangsseitig in mehrere Kammern unterteilt sein. Die Ringwände können mit Durchbrüchen oder Sicken oder mit anderen Formschlusselementen versehen sein, die dazu geeignet sind die beiden Ringprofile ineinander zu halten.

Der Boden des jeweiligen Ringprofils ist entweder eine lochscheibenförmige Platte oder ist beliebig gewölbt, durch Durchbrüche unterbrochen oder beliebig anders strukturiert. So können die Böden der Ringprofile torusartig gewölbt, sein, sind vorzugsweise jedoch flach mit im wesentlichen kreisringflächenartiger Grundfläche ausgebildet. Der Boden kann das jeweilige Profil endseitig verschließen oder ist beispielsweise mittig des Ringprofils so angeordnet, dass das Ringprofil im Längsschnitt entlang der Mittelachse ein H-Profil bildet, bei dem der Boden die Querverbindung zwischen den Schenkeln ist.

Die Grundform der Ringprofile kann gleich sein. Die Grundformen der Ringprofile eines TCE können jedoch auch voneinander abweichen. Die Ringprofile sind aus gleichem Material oder zueinander aus unterschiedlichem Material, vorzugsweise aus Stahlblech, können aber auch aus Leichtmetallen und deren Legierungen oder aus Kunststoff sein. Wenigstens das Material eines der Profile, vorzugsweise beider Profile weist einen Wärmeausdehnungskoeffizienten auf, der geringer ist als die des Materials des Dehnelements.

Das Dehnelement kann ein Ring sein oder ist aus Segmenten gebildet die trennbar oder untrennbar aneinander liegen. Die Segmente folgen beispielsweise in Umfangsrichtung in dem Gehäuse aufeinander oder liegen in axialer Richtung nebeneinander. So ist es denkbar, dass der erste Abschnitt des Dehnelements separat zu dem zweiten Abschnitt des Dehnelements ausgebildet ist.

Ein Abschnitt des Dehnelements ist radial zwischen den Schenkeln des ersten Ringprofils geführt. Erfindungsgemäß steht ein zweiter Abschnitt des Dehnelements axial aus diesem ersten Ringprofil heraus und liegt axial an dem Boden des zweiten Ringprofils an. Zwischen den zweiten Ringwänden des zweiten U-förmigen Ringprofils und dem zweiten Abschnitt des Ausgleichelements ist erfindungsgemäß kein Ringspalt mehr ausgebildet - sondern der zweite Abschnitt liegt radial auch am nicht verspannten TCE an. Nicht verspannt heißt in diesem Sinne, dass das TCE noch unverbaut vorliegt oder dass das TCE zwar verbaut ist, aber zwecks Spielausgleich axial teleskopisch noch verlängernd operiert. Der zweite Abschnitt des Dehnelements liegt radial an den zweiten Ringwänden an und ist an diesen abgestützt.

Wie anfangs im Kapitel "Hintergrund der Erfindung" schon erwähnt, ist ein Abschnitt des Dehnelements des TCE nach US 5, 028, 152 A radial zwischen den Ringwänden des ersten Ringprofils geführt. Ein weiterer Abschnitt steht axial aus diesem ersten Ringprofil heraus und in das zweite Ringprofil hinein. Zwischen den außen liegenden und innen liegenden zweiten Ringwänden des zweiten Ringprofils und dem zweiten Abschnitt des Ausgleichelements ist jeweils ein Ringspalt ausgebildet, dessen radiale Abmessung im unbelasteten Ausgangszustand des Thermokompensationselements der radialen Wanddicke der Ringwände des ersten Ringprofils entspricht. Wenn die Schräglageranordnung spielfrei vorgespannt ist, ist das Dehnelement ebenfalls der eigenen Vorspannkraft ausgesetzt, und wird zunächst elastisch in diesen Ringspalt ausweichen und sich beim Nachlassen der Vorspannung wieder aus diesem zurückziehen. Der Verlauf der Vorspannung ist zumindest solange zufällig, bis auch der zweite Abschnitt radial an den Ringwänden des zweiten Ringprofils abgestützt ist.

Die Vorspannung des TCE nach US 5, 028, 152 A ist durch dieses nahezu rein kraft-weg-elastische Verhalten anfangs über einen relativ weiten Bereich relativ weich und mit großen Abweichungen behaftet. Wird der Ringspalt nur durch das Vorspannen der Lagereinheit nicht vollständig ausgefüllt, wird sich darüber hinaus das Material durch Wärmedehnung beim Anstieg der Betriebstemperaturen in den Ringspalt ausdehnen. Erst wenn der Ringspalt durch das Material vollständig ausgefüllt ist, wird, endet das nahezu rein kraft-weg-elastische Verhalten, das Dehnelement ist auf Block eingespannt und der Einfluss der Wärmedehnung wird direkt in axiale teleskopische Bewegungen umgesetzt. Durch geringe Unterschiede oder abweichende Einflüsse innerhalb baugleicher TCE können sich die Charakteristiken mehrerer baugleicher TCE deshalb untereinander unterscheiden und eine optimale Vorhersage und Einstellung der Vorspannung ist nicht möglich.

Demnach ist bei der Einstellung der Vorspannung einer Lageranordnung nach US 5, 028, 152 A außer dem beschriebene längenspezifischen Ausdehnungskoeffizient auch der volumenspezifische Ausdehnungskoeffizient des Materials des Dehnelements zu berücksichtigen. Das Verformungsverhalten der Dehnelements ist aufgrund des kraft-weg-elastischem Ausweichens in freie Volumen des Gehäuses dementsprechend für vorgegebene Betriebzustände schwer zu berechnen und streut von Element zu Element. Darüber hinaus kann das Dehnelement insbesondere an den relativ scharfkantigen Übergängen an dem Ende der ersten Ringwände bei häufiger Ausdehnung und Kontraktion schnell ermüden oder beschädigt werden. Außerdem ist es dort nicht immer vollständig am Gehäuse abgestützt. Dementsprechend kann es seine Dehnungs- bzw. Vorspanncharakteristik verlieren, so dass sich diese mit zunehmender Betriebsdauer vorzeitig und nicht vorhersehbar verändern können.

Gemäß der Erfindung ist jedoch auch zwischen dem zweiten Abschnitt des Dehnelements und den Ringwänden des zweiten Ringprofils kein Ringspalt ausgebildet, sondern auch der zweite Abschnitt ist zumindest radial an den Ringwänden des zweiten Ringprofils abgestützt. Die Anordnung bewirkt, dass der gegenüber dem ersten Abschnitt radial überstehende Teil des zweiten Abschnitts des Dehnelements axial zwischen den Ringwänden und dem Boden des zweiten Ringprofils angeordnet ist, an diesen axial anliegt und unter Vorspannung zwischen diesen eingeklemmt ist.

Wenn die Schräglageranordnung spielfrei vorgespannt und das Dehnelement ebenfalls der eigenen Vorspannkraft ausgesetzt ist, stützt sich das erste Ringprofil mit den Ringwänden axial an dem überstehenden Teil ab, so dass der überstehende Teil des zweiten Abschnitts schon in der Einbaulage "auf Block" belastet ist. Durch eine derartige Anordnung ist sichergestellt, dass die Wärmeausdehnung des Dehnelements überwiegend in teleskopischem Verhalten des TCE resultiert, so dass dessen Verformungsverhalten für bestimmten Betriebszuständen vorher besser ermittelt werden kann.

Da das erste Ringprofil in dem zweiten Ringprofil steckt, ist das Aufnahmevolumen in dem zweiten Ringprofil größer als das des ersten Ringprofils. Der quer zur Mittelachse betrachtete Querschnitt und damit die radialen Abmessungen des zweiten Abschnitts des Dehnelements sind da, wo der zweite Abschnitt an den zweiten Ringwänden anliegt, größer als es die radialen Abmessungen des erstens Abschnitts da sind, wo dieser an den ersten Ringwänden anliegt. Demnach sind die radialen Abmessungen des zweiten Abschnitts um ein die Summe der gleichgerichteten radialen Wandstärke der beiden ersten Ringwände des ersten Profilrings unter Umständen zuzüglich eines geringen radialen Spiels zwischen dem ersten Ringprofil und dem zweiten Ringprofil. Durch eine derartige Gestaltung ist es möglich, das Kompensationsverhalten der TCE auch zusätzlich noch über die Wandstärke der umlaufend hohlzylindrisch ausgebildeten ersten Ringwände zu steuern. So ist mit einer Ausgestaltung der Erfindung vorgesehen, dass die radial gerichtete Wandstärke der ersten Ringwände des ersten Ringprofils zumindest da, wo das Ausgleichelement an den ersten Schenkeln anliegt, geringer ist als die gleichgerichtete Wandstärke der zweiten Ringwänden des zweiten Rings zumindest da, wo der zweite Abschnitt an den zweiten Schenkeln anliegt.

Darüber hinaus lässt sich die Steifigkeit des aus den beiden Ringprofile gebildeten Gehäuses durch die Wandstärke der Ringprofile beeinflussen, die sich untereinander unterscheiden können und die in diesem Fall im Wesentlichen der Wandstärke ihrer jeweiligen Ringwände entspricht.

Weiterhin lässt sich die Steifigkeit des TCE auch dadurch beeinflussen, dass der erste Abschnitt und der zweite Abschnitt zumindest mit radialer Vorspannung in dem jeweiligen Ringprofil gegenüber den jeweiligen Schenkeln abgestützt sind. Das Dehnelement weist also, wenn es noch nicht in die Profile montiert ist, gegenüber dem radialen Abstand zwischen den Ringwänden jeweils ein Übermaß auf. Das TCE ist sehr steif, so dass bei der Auslegung des Kompensationsverhaltens nur noch Längenänderungen aufgrund der Temperatureinflüsse zugrunde gelegt werden müssen. Einflüsse aus kraft-weg-elastischem Ausweichen des Materials eliminiert.

Ausgeschlossen sind die kraft-weg-elastischen Einflüsse von vorneherein, wenn das durch die beiden Ringprofile begrenzte Volumen auch schon am unbelasteten TCE von dem Material des Dehnelements vollständig ausgefüllt ist. Dazu ist das Dehnelement möglichst mit berechneter radialer Vorspannung zwischen den ersten und zweiten Ringwänden angeordnet und liegt beidseitig axial jeweils an einem der Böden der Ringprofile sowie axial in einer Richtung an den ersten Ringwänden an.

Eine Ausgestaltung der Erfindung sieht vor, dass die ersten Ringwände stirnseitig axial an dem zweiten Abschnitt anliegen, also axial an diesem abgestützt sind, aber axial nicht an dem Boden des ersten Ringprofils. Gemäß der Ausgestaltung der Erfindung verbleibt deshalb ein Spiel zwischen dem Boden des ersten Ringprofils und dem ersten Abschnitt des Dehnelements. In diesem Abstand sind Einzelteil und Einbautoleranzen berücksichtigt, so dass sichergestellt ist, dass sich im Ausgangszustand des fertig montierten TC-Elements zuerst der zweite Abschnitt des Dehnelements die stirnseitig die Schenkel des ersten Ringprofils und nicht der Boden des ersten Ringprofils und der erste Abschnitt des Dehnelements berühren. Der anfangs kraft-weg-elastische Einfluss dieses Spalts ist aufgrund seine geringen Abmessungen gering. Dessen Einfluss wird bei Beginn der teleskopischen Operation des TCE schnell überwunden. Darüber hinaus lässt sich die Charakteristik des TCE gezielt weich und hart einstellen, wenn an dieser Stelle bewusst ein axiales Spiel verbleibt. Die verfälschenden und störenden Einflüsse von scharfen Kantenübergängen gibt es in diesem Fall nicht.

Die Änderung der axialen Länge des TCE ist zu Beginn der Belastung bis zur Überwindung des Spiels s auch von möglichem Kraft-Weg elastischen Ausweichen des Materials in das durch das Spiel begründete Leervolumen beeinflusst. Da sich die Schenkel des ersten Ringprofils axial an dem relativ starr zwischen den Schenkeln des zweiten Profils vorgespannten zweiten Abschnitt des Dehnelements abstützen, ist jedoch die axiale Kontraktion aufgrund des kraft-weg elastischen Ausweichen des TCE vorbestimmbar und mit einer Prüflast am fertig montierten TCE in einem Ausgangszustand reproduzierbar. Andererseits ist sichergestellt, dass nach dem Ausfüllen des spielbedingten Spalts jeder weitere Einfluss von Einzelteil und Baugruppentoleranzen auf das Dehnverhalten des TC-Elements ausgeschlossen ist.

Die Erfindung sieht außerdem eine Lageranordnung an einer Stützstruktur, in der wenigstens ein Wälzlager und ein Thermokompensationselement nach den Merkmalen des Hauptanspruchs angeordnet sind, Das Wälzlager ist aus wenigstens einem axial zur Stützstruktur verschiebbaren Lagerring sowie aus an dem Lagerring abwälzenden Wälzkörpern gebildet, wobei das Thermokompensationselement axial als Widerlager zwischen dem Lagerring und der Stützstruktur angeordnet ist. Die Stützstruktur ist beispielsweise ein Gehäuse, eine Lagerbrille, eine Getriebewelle. Das Wälzlager ist ein Radiallager alternativ ein Axiallager oder ein Schräglager. Das Wälzlager weist Rollen und/oder Kugeln auf. Der Lagerring ist entweder ein Außenring, ein Innenring oder eine sogenannte Axialscheibe eines Axiallagers. Die Erfindung ist vorzugsweise in einer Lageranordnung mit gegeneinander angestellten und spielfrei vorgespannten Schräglagern wie Kegelrollenlager, Schrägrollenlagern oder Schrägkugellagern vorgesehen. In diesem Fall ist das Thermokompensationselement axial zwischen der Stützstruktur und dem Lagerring eines der Schräglager eingespannt ist.

Weiterer Ausgestaltungen sehen vor, dass der Außendurchmesser des Thermokompensationselementes den Außendurchmesser des Lagerrings nicht überschreitet, so dass das jeweilige TC-Element an vorhandene Lagersitze im Gehäuse oder auf Wellen angepasst ist und zusätzlicher Aufwand zur Unterbringung des TC-Elements vermieden ist und das entsprechende Lager kann beispielsweise vor der Montage in den Lagersitz mit dem Dehnelement vormontiert werden.

Das Verformungsverhalten des erfindungsgemäßen TC-Elements lässt sich sehr genau vorbestimmen und bleibt in allen Betriebszuständen mit geringen Abweichungen von Sollzuständen stabil. Dementsprechend kann insbesondere die Vorspannung von Schräglageranordnungen in allen Betriebszuständen sehr genau eingehalten werden.

Eine weitere Ausgestaltung der Erfindung sieht vor, dass der Werkstoff des Dehnelements ein thermoplastisches Elastomer ist. Der Volumen-Wärmeausdehnungskoeffizient $3*\alpha$ des Werkstoffs, gemessen unter einer Krafteinwirkung von 20 kN ist vorzugsweise größer als $50 \times 10^{-5}$ $K^{-1}$. Als Werkstoff ist beispielsweise ein TPU-ARES gemäß der ISO 18064 vorgesehen. Ein Ring aus einem derartigen Werkstoff ist vergleichsweise zu Viton kostengünstig und als Einzelteil in einem Spritzwerkzeug spritzbar. Wenn darüber hinaus auch die Ringprofile einfache kalt geformte Teile aus Blech ist ein derartiges TC-Element einfach und sehr kostengünstig herstellbar.

## Beschreibung der Zeichnungen

## Kurze Beschreibung der Zeichnungen

Die Erfindung wird nachfolgend anhand von Ausführungsbeispielen näher erläutert. Es zeigen:

Figur 1    eine Lageranordnung von zwei Schrägwälzlagern an einer Stützstruktur einer Getriebewelle,

Figur 2    ein Ausführungsbeispiel eines TCE in einer Perspektive Schnittansicht,

Figur 3    das TCE nach Figur 2 in einem Längsschnitt entlang seiner Mittelachse,

Figur 4    das Dehnelement aus dem TCE nach Figur 2 in einem Längsschnitt wie in Figur 3,

Figur 5    das Detail X des Dehnelements nach Figur 4 stark vergrößert und nicht maßstäblich,

Figur 6    das Detail Z aus der Lage Anordnung nach Figur 1 stark vergrößert und nicht maßstäblich, wobei nur ein Längsschnitt durch das TCE abgebildet ist,

## Ausführliche Beschreibung der Zeichnungen

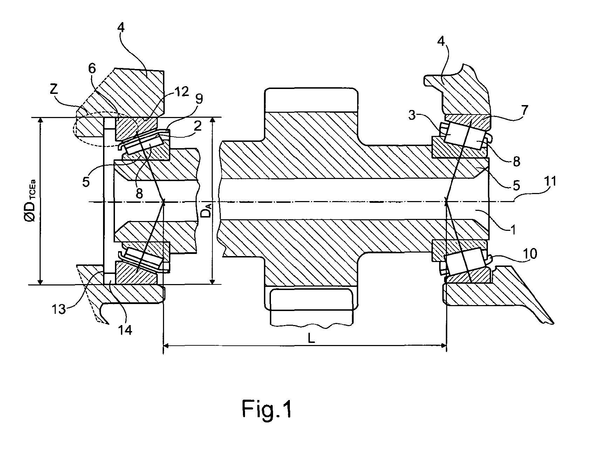

Figur 1 zeigt eine Lageranordnung aus zwei Schrägwälzlagern 2 und 3, mit denen eine vereinfacht dargestellte Getriebewelle 1 in einem Gehäuse 4 gelagert ist. Die Schrägwälzlager 2 und 3 in Form von Kegelrollenlagern und die Getriebewelle 1 sind aus Stahl. Das Gehäuse 4 ist aus Aluminiumguss. Die Rotationsachse 11 der Getriebewelle 1 ist axial ausgerichtet. Die Schrägwälzlager 2 und 3 sind jeweils aus einem Innenring 5, einem Außenring 6 bzw. 7 und aus Wälzkörpern 8 gebildet. Die Wälzkörper 8 sind jeweils in Käfigen 9 und 10 geführt.

Der Außenring 6 des Schrägwälzlagers 2 ist axial verschiebbar in dem Gehäuse 4 aufgenommen. In dem Gehäuse 4 sind dazu ein innenzylindrischer Sitz 12 und ein radial hervorstehender Axialanschlag 13 ausgebildet. Ein Thermokompensationselement (TC-Element, TCE) 14 ist axial als Widerlager zwischen dem Lagerring (außenring) 6 und dem Axialanschlag 13 angeordnet. Der Außendurchmesser Ø $D_{TCEa}$ ist nicht größer und in diesem Falle gleich groß dem Außendurchmesser $D_A$ des Außenrings.

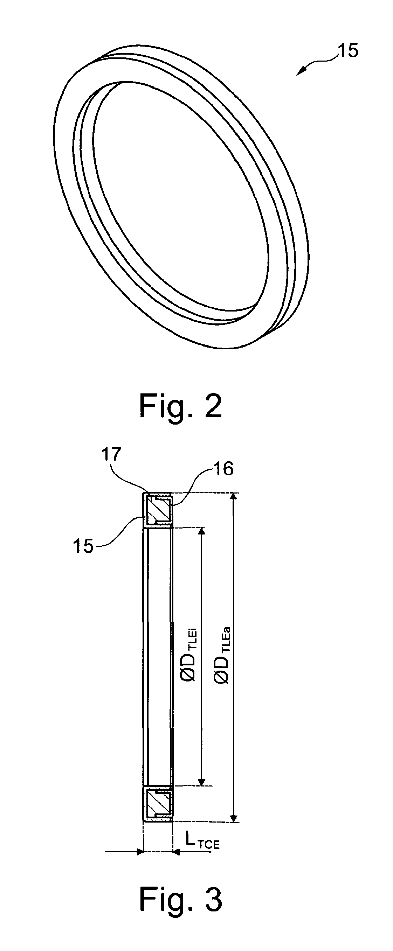

Die folgende Beschreibung ist auf die Darstellungen nach Figur 2, 3, 4, 5 und Figur 6 gerichtet, wobei Figur 2 das TCE in eine perspektivische Gesamtansicht zeigt.

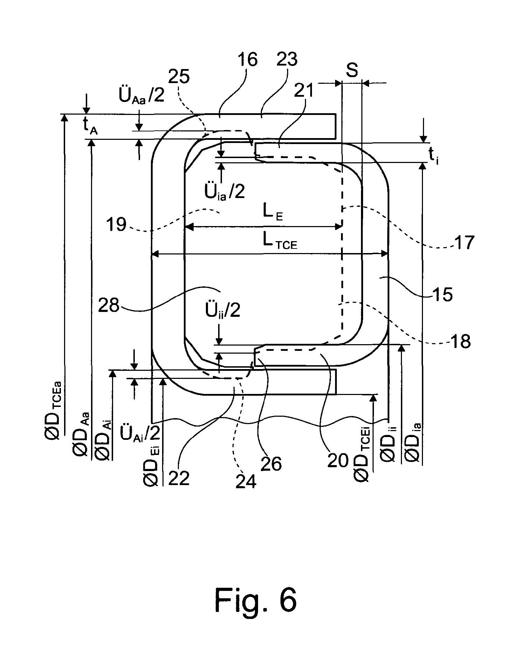

Figuren 3 und 6: Das TC-Element 14 ist aus einem ersten Ringprofil 15 und einem zweiten Ringprofil 16 und aus einem zwischen dem ersten Ringprofil 15 und dem zweiten Ringprofil 16 gekapselten Dehnelement 17. Das TCE weist den Innendurchmesser 0 $D_{TCEi}$) und den Außendurchmesser 0 $D_{TCEa}$ auf und ist im Ausgangszustand in axiale Richtung durch die Breite $L_{TCE}$ beschrieben.

Die Ringprofile 15 und 16 sind axial entlang einer gemeinsamen Mittelachse 11 gegeneinander verschiebbar. Die Ringprofile 15 und 16 sind im Längsschnitt entlang der Mittelachse 11 betrachtet U-Profile. Die Schenkel der U-Profile sind axial ausgerichtet und durch konzentrische hohlzylindrische Ringwände beschrieben. Das erste Ringprofil 15 sitzt mit der Öffnung voran zwischen den Schenkeln des zweiten Ringprofils16, so dass das erste Ringprofil 15 und das zweite Ringprofil 16 radial aneinander geführt sind. Die Steifigkeit des aus den beiden Ringprofile 15 und 16 gebildeten Gehäuses lässt sich durch die Wandstärken $t_i$ des ersten Ringprofils 15 und des zweiten Ringprofils 16 beeinflussen, die sich untereinander unterscheiden können und die in diesem Fall im Wesentlichen der Wandstärke ihrer jeweiligen Ringwände 20, 21, 22 und 23 entspricht. Mit einer Ausgestaltung der Erfindung ist vorgesehen, dass das Verhältnis der radialen Wandstärke $t_i$ der inneren Ringwand 20 bzw. äußeren Ringwand 21 des ersten Ringprofils 15 zur radialen Wandstärke $t_a$ der inneren Ringwand 22 bzw. äußeren Ringwand 23 kleiner oder gleich einem Verhältnis von 3:4 ist:

$$\frac{t_I}{t_A} \le \frac{3}{4}$$

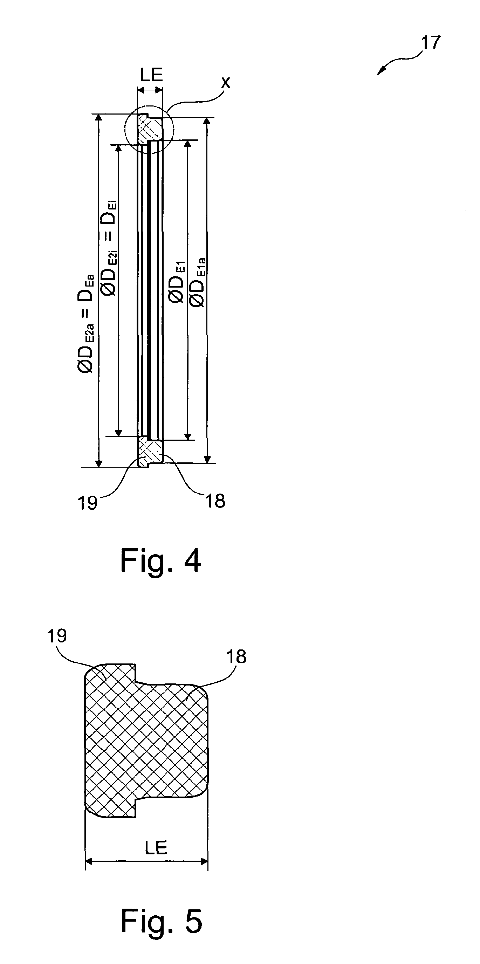

Figuren 4 und 5: Das Dehnelement 17 ist ein Ring und einteilig aus einem ersten Abschnitt 18 und aus einem zweiten Abschnitt 19 gebildet. Die Abmessungen des ersten Abschnitts 18 sind durch die Durchmesser $\varnothing D_{E1a}$ und $\varnothing D_{E1I}$ sowie die Breite $L_{E1}$ beschrieben. Der zweite Abschnitt 18 weist die Abmessungen $\varnothing D_{E2a}$, $\varnothing D_{E1i}$ und $L_{E1}$ auf.

Dementsprechend ist der Innendurchmesser $\varnothing D_{E1i}$ des ersten Abschnitts 17 größer als der Innendurchmesser $0 D_{EI}$ des zweiten Abschnitts 18 und der Außendurchmesser $\varnothing D_{Ea}$ des zweiten Abschnitts 18 größer als der Außendurchmesser $\varnothing D_{E1a}$. Dadurch sieht das Dehnelements 17 in einem Längsschnitt entlang der Mittelachse 11 im Detail X pilzförmig aus und weist einen nicht bildlich dargestellten quer zur axialen Richtung und damit senkrecht zur Mittelachse betrachteten Querschnitt des zweiten Abschnitts 19 auf, der größer ist als der Querschnitt des ersten Abschnitts 18.

Der Außendurchmesser des Dehnelement ist als $\varnothing D_{Ea}$ und der Innendurchmesser als $\varnothing D_{Ei}$ bezeichnet. Das Material des Dehnelements 17 ist aus einem thermoplastischen Elastomer und weist deshalb einen Wärmedehnungskoeffizienten auf, der größer ist als der Wärmeausdehnungskoeffizient des Stahlbleches ist, aus dem die Ringprofile 15 und 16 sind. Die radialen Abmessungen des zweiten Abschnitts 19 entsprechen mindestens den radialen Abmessungen des ersten Abschnitts 18 zwischen den ersten Ringwänden zuzüglich einem Zweifachen der gleichgerichteten radialen Wandstärke $t_I$ der Ringwände 20 und 21 des ersten Ringprofils 15.

Figuren 5 und 6: Das Dehnelement 17 ist in Figur 6 gestrichelt dargestellt und an dem ersten Abschnitt 18 innen- und außenumfangsseitig zumindest teilweise von der inneren Ringwand 20 und der äußeren Ringwand 21 des ersten Ringprofils 15 eingeschlossen. Der zweite Abschnitt 19 des Dehnelements 17 ist innen- und außen umfangsseitig von der inneren Ringwand 22 und der äußeren Ringwand 23 eingeschlossen und liegt axial an dem ringscheibenförmigen Abschnitt 28 des zweiten Ringprofils 16 an. Der zweite Abschnitt 19 steht radial nach innen und nach außen über den ersten Abschnitt 18 hinaus, so dass das überstehende ringförmige Segment 24 innen der Stirnseite 26 der inneren Ringwand 20 und das radial außen überstehende Segment 25 außen der Stirnseite 27 der äußeren Ringwand 23 des ersten Ringprofils 15 gegenüber liegt. Das erste Ringprofil 15 stützt sich im vorgespannten Betrieb axial an den überstehenden ringförmigen Segmenten 24 und 25 ab.

Die beiden Abschnitte 18 und 19 sitzen jeweils mit dem Übermaß $Ü_{Aa}/2$ und $Ü_{Ai}/2$ bzw. $Ü_{II}/2$ und $Ü_{II}/2$ in dem jeweiligen Ringprofil 15 bzw. 16, da:

- der Außendurchmesser $D_{AI}$ der inneren Ringwand 22 des zweiten Ringprofils 16 größer ist als der Innendurchmesser $\varnothing D_{Ei}$ des Dehnelements 17,

- der Innendurchmesser der äußeren Ringwand 23 des zweiten Ringprofils 16 kleiner ist als der Außendurchmesser $\varnothing D_{Ea}$ des Dehnelements 17,

- der Außendurchmesser $\varnothing D_{II}$ der inneren Ringwand 20 des ersten Ringprofils 15 größer ist als der Innendurchmesser $\varnothing D_{E1i}$ des ersten Abschnitts 18 und

- der Außendurchmesser $\varnothing D_{E1a}$ des ersten Abschnitts 18 größer ist als der Innendurchmesser $D_{Ia}$ der äußeren Ringwand 21 des ersten Ringprofils 15.

Der erste Abschnitt 18 und das erste Ringprofil 15 axial berührungslos mit mindestens einem Abstand s (Axialspiel) zueinander angeordnet. Das Verhältnis des Abstands s zur axialen Abmessung $L_E$ des Dehnelements 17 im Ausgangszustand ist zumindest bei Temperaturen des Thermokompensationselements von 20°C größer oder gleich dem Zahlenwert Null und kleiner 0,02.

Die Länge $L_{TCE}$ des TC-Elements ohne Axialspiel s entspricht der Summe aus der Länge des Dehnelements 17, der axialen Wandstärke $t_i$ des ersten Ringprofils 15 und der axialen Wandstärke $t_a$ des zweiten Ringprofils 16, wenn die radialen Wandstärken und axialen Wandstärken des U-Profils am jeweiligen Ringprofil miteinander gleich sind:

$$L_{TCE} \approx L_E + t_i + t_a$$

und dementsprechend unter Berücksichtigung des Axialspiels:

$$L_{TCE} \approx L_E + t_i + t_a + S,$$

wobei in beiden Fällen $L_E$ Länge des nicht verbauten Dehnelements 17 ist.

Das Axialspiel s bestimmt sich vorzugsweise in dem Bereich:

$$0 \leq \frac{s}{L_E} < \frac{1}{50}$$

Figur 1 und Figur 5: Die Erfindung macht es möglich, dass die Länge $L_E$ des Dehnelements 17 in Abhängigkeit von dem mittleren Lagerabstand L der Lagerstellen einer Lageranordnung mit zwei axial zueinander angeordneten Lagern 2 und 3 abhängig von den Wärmeausdehnungskoeffizienten $\alpha_0$ der Materialien eines Gehäuses 4, $\alpha_W$ einer Welle 4 und $\alpha_E$ des Dehnelements 17 sehr genau bestimmt werden kann. Sie liegt vorzugsweise für eine Lageranordnung in einem Gehäuse 4 aus Aluminium und seinen Legierungen sowie mit einer Welle 1 aus Stahl und einem Ausgleichsring aus thermoplastischen Elastomer in einem Bereich 0,02 L </= $L_E$ </= 0,03 L.

## Bezugszeichen

| | | | |
|---|---|---|---|
| 1 | Getriebewelle | 21 | äußere Ringwand |
| 2 | Schrägwälzlager | 22 | innere Ringwand |
| 3 | Schrägwälzlager | 23 | äußere Ringwand |
| 4 | Gehäuse | 24 | radial innen überstehendes Segment |
| 5 | Innenring | 25 | radial außen überstehendes Segment |
| 6 | Außenring | 26 | Stirnseite |
| 7 | Außenring | 27 | Stirnseite |
| 8 | Wälzkörper | 28 | ringscheibenförmiger Abschnitt |
| 9 | Käfig | | |
| 10 | Käfig | | |
| 11 | Rotationsachse | | |
| 12 | innenzylindrischer Sitz | | |
| 13 | Axialanschlag | | |
| 14 | Thermokompensationselement (TCE) | | |
| 15 | erstes Ringprofil | | |
| 16 | zweites Ringprofil | | |
| 17 | Dehnelement | | |
| 18 | erster Abschnitt | | |
| 19 | zweiter Abschnitt | | |

(fortgesetzt)

| 20 | innere Ringwand | | |
|----|-----------------|----|----|

**Patentansprüche**

1. Thermokompensationselement (14) mit wenigstens einem zwischen einem ersten Ringprofil (15) und einem zweiten Ringprofil (16) gekapselten Dehnelement (17), wobei das Material des Dehnelements (17) wenigstens einen Wärmedehnungskoeffizienten aufweist, der größer ist als der Wärmeausdehnungskoeffizient des Materials, aus dem wenigstens eines der Ringprofile (15, 16) ist, und wobei die Ringprofile (15, 16) axial entlang einer gemeinsamen Mittelachse (11) gegeneinander axial verschiebbar und radial aneinander geführt so ineinander stecken, dass axial ausgerichtete Ringwände (20, 21) des ersten Ringprofils (15) zumindest teilweise zwischen axial ausgerichtete Ringwände (22, 23) des zweiten Ringprofils (16) greifen und dabei das Dehnelements (17) an einem ersten Abschnitt (18) umfangsseitig zumindest teilweise von den Ringwänden (20, 21) des ersten Ringprofils (15) eingeschlossen ist, **dadurch gekennzeichnet, dass** das Dehnelement (17) einen zweiten Abschnitt (19) aufweist, der umfangsseitig zumindest teilweise von dem zweiten Ringprofil (16) so eingefasst ist, dass der zweite Abschnitt (19) radial an den Ringwänden (22, 23) des zweiten Ringprofils (16) sowie axial an den Ringwänden (20, 21) des ersten Ringprofils (15) anliegt.

2. Thermokompensationselement nach Anspruch 1, **dadurch gekennzeichnet, dass** der zweite Abschnitt (19) des Dehnelements (17) zwischen den Ringwänden (22, 23) des zweiten Ringprofils (16) radial geführt und axial in eine Richtung an dem zweiten Ringprofil (16) abgestützt ist.

3. Thermokompensationselement nach Anspruch 1 oder 2, **dadurch gekennzeichnet, dass** der radial zwischen den Ringwänden (20, 21) des ersten Ringprofils (15) geführte erste Abschnitt (18) axial berührungslos zu dem ersten Ringprofil (15) ist,

4. Thermokompensationselement nach Anspruch 1, **dadurch gekennzeichnet, dass** der Querschnitt quer zur axialen Richtung des zweiten Abschnitts (19) des Dehnelements (17) größer ist als der Querschnitt des ersten Abschnitts (18).

5. Thermokompensationselement nach Anspruch 1, **dadurch gekennzeichnet, dass** die radialen Abmessungen des zweiten Abschnitts (19) des Dehnelements (17) da, wo der zweite Abschnitt (19) von den Ringwänden (22, 23) des zweiten Ringprofils (16) umfangsseitig umschlossen ist, größer sind, als es die radialen Abmessungen des erstens Abschnitts (18) da sind, wo dieser von den Ringwänden (20, 21) des ersten Ringprofils (15) umfangsseitig umschlossen ist.

6. Thermokompensationselement nach Anspruch 5, **dadurch gekennzeichnet, dass** die radialen Abmessungen des zweiten Abschnitts (19) mindestens den radialen Abmessungen des ersten Abschnitts (18) zwischen den Ringwänden (20, 21) des ersten Ringprofils (15) zuzüglich einem Zweifachen der gleichgerichteten radialen Wandstärke (ti) der Ringwände (22, 23) des ersten Ringprofils (15) entsprechen.

7. Thermokompensationselement nach Anspruch 1, **dadurch gekennzeichnet, dass** die radial gerichtete Wandstärke $(t_l)$ der Ringwände (20, 21) des ersten Ringprofils (15) zumindest da, wo das Dehnelement (17) an den ersten Ringwänden (20, 21) anliegt, geringer ist als die gleichgerichtete Wandstärke $(t_a)$ zumindest einer der Ringwände (22, 23) des zweiten Ringprofils (16) zumindest da, wo der das Dehnelement (17) an den Ringwänden (22, 23) des zweiten Ringprofils (16) anliegt.

8. Thermokompensationselement nach Anspruch 7, **dadurch gekennzeichnet, dass** das Verhältnis der radialen Wandstärke $(t_i)$ wenigstens einer der jeweiligen Ringwände (20, 21) des ersten Ringprofils (15) jeweils zur radialen Wandstärke $(t_a)$ wenigstens einer der Ringwände (22, 23) des zweiten Ringprofils (16) kleiner oder gleich einem Verhältnis von 3:4 ist.

9. Thermokompensationselement nach Anspruch 1, **dadurch gekennzeichnet, dass** der erste Abschnitt (15) und der zweite Abschnitt (16) zumindest in dem jeweiligen Ringprofil (15, 16) zwischen den jeweiligen Ringwänden (20, 21, 22, 23) mit radialer Vorspannung eingespannt sind.

**10.** Thermokompensationselement nach Anspruch 1, **dadurch gekennzeichnet, dass** der erste Abschnitt (18) und das erste Ringprofil (15) axial berührungslos mit mindestens einem Abstand zueinander angeordnet sind, dessen Verhältnis zur axialen Abmessung des Dehnelements (17) im Ausgangszustand zumindest bei Temperaturen des Thermokompensationselements (14) von 20°C größer oder gleich dem Zahlenwert Null und kleiner 0,02 ist.

**11.** Dehnelement **eines** Thermokompensationselements nach Anspruch 1, **dadurch gekennzeichnet, dass** das Dehnelements (17) einteilig **aus dem ersten Abschnitt (18) und aus dem zweiten Abschnitt (19)** gebildet ausgebildet ist.

**12.** Dehnelement nach Anspruch 11, **dadurch gekennzeichnet, dass** der Werkstoff des Dehnelements (17) ein thermoplastisches Elastomer ist.

**13.** Lageranordnung mit wenigstens einem Wälzlager (2, 3) und einem Thermokompensationselement (14) nach Anspruch 1, in der das Wälzlager (2) aus wenigstens einem axial verschiebbaren Lagerring (6) sowie aus an dem Lagerring (6) abwälzenden Wälzkörpern (8) gebildet ist, **dadurch gekennzeichnet, dass** das Thermokompensationselement (14) axial als Widerlager zwischen dem Lagerring (6) und einem Gehäuse (4) angeordnet ist.

**14.** Lageranordnung nach Anspruch 13, **dadurch gekennzeichnet, dass** der Außendurchmesser des Thermokompensationselementes (14) den Außendurchmesser des Lagerrings (6) nicht überschreitet.

**15.** Lageranordnung nach Anspruch 13, **dadurch gekennzeichnet, dass** die axiale Länge des Dehnelements (17) im montierten Ausgangszustand auf einen Wert größer als das 0, 02 fache des mittleren axialen Lagerabstands der Schräglager (2, 3) und kleiner als bzw. gleich dem 0,3 fachen des mittleren axialen Lagerabstands der Wälzlager (2, 3) zueinander eingestellt ist.

**Claims**

**1.** Thermocompensation element (14) having at least one expansion element (17) encapsulated between a first ring profile (15) and a second ring profile (16), wherein the material of the expansion element (17) has at least a coefficient of thermal expansion higher than the coefficient of thermal expansion of the material from which at least one of the ring profiles (15, 16) is formed, and wherein the ring profiles (15, 16) are axially displaceable relative to one another axially along a common central axis (11) and extend one into the other, so as to be guided radially on one another, such that axially oriented ring walls (20, 21) of the first ring profile (15) engage at least partially between axially oriented ring walls (22, 23) of the second ring profile (16), and here, the expansion element (17) is, at a first section (18), enclosed circumferentially at least partially by the ring walls (20, 21) of the first ring profile (15), **characterized in that** the expansion element (17) has a second section (19) which is circumferentially at least partially enclosed by the second ring profile (16) such that the second section (19) bears radially against the ring walls (22, 23) of the second ring profile (16) and axially against the ring walls (20, 21) of the first ring profile (15).

**2.** Thermocompensation element according to Claim 1, **characterized in that** the second section (19) of the expansion element (17) is guided radially between the ring walls (22, 23) of the second ring profile (16) and is supported axially in one direction on the second ring profile (16).

**3.** Thermocompensation element according to Claim 1 or 2, **characterized in that** the first section (18), which is guided radially between the ring walls (20, 21) of the first ring profile (15), does not make axial contact with the first ring profile (15).

**4.** Thermocompensation element according to Claim 1, **characterized in that** the cross section, perpendicular to the axial direction, of the second section (19) of the expansion element (17) is larger than the cross section of the first section (18).

**5.** Thermocompensation element according to Claim 1, **characterized in that** the radial dimensions of the second section (19) of the expansion element (17) where the second section (19) is circumferentially enclosed by the ring walls (22, 23) of the second ring profile (16) are larger than the radial dimensions of the first section (18) where said first section is circumferentially enclosed by the ring walls (20, 21) of the first ring profile (15).

**6.** Thermocompensation element according to Claim 5, **characterized in that** the radial dimensions of the second section (19) correspond at least to the radial dimensions of the first section (18) between the ring walls (20, 21) of the first ring profile (15) plus two times the radial wall thickness ($t_i$), in the same direction, of the ring walls (22, 23) of the first ring profile (15).

7. Thermocompensation element according to Claim 1, **characterized in that** the radially oriented wall thickness ($t_i$) of the ring walls (20, 21) of the first ring profile (15) at least where the expansion element (17) bears against the first ring walls (20, 21) is smaller than the wall thickness ($t_a$), in the same direction, of at least one of the ring walls (22, 23) of the second ring profile (16) at least where the expansion element (17) bears against the ring walls (22, 23) of the second ring profile (16).

8. Thermocompensation element according to Claim 7, **characterized in that** the ratio of the radial wall thickness ($t_i$) of at least one of the respective ring walls (20, 21) of the first ring profile (15) in each case to the radial wall thickness ($t_a$) of at least one of the ring walls (22, 23) of the second ring profile (16) is less than or equal to ratio of 3:4.

9. Thermocompensation element according to Claim 1, **characterized in that** the first section (18) and the second section (19) are, at least in the respective ring profile (15, 16), braced with radial preload between the respective ring walls (20, 21, 22, 23).

10. Thermocompensation element according to Claim 1, **characterized in that** the first section (18) and the first ring profile (15) are arranged relative to one another so as not to make axial contact, with at least a spacing whose ratio to the axial dimension of the expansion element (17) in the initial state, at least when the thermocompensation element (14) is at temperatures of 20°C, is greater than or equal to the numerical value zero and less than 0.02.

11. Expansion element of a thermocompensation element according to Claim 1, **characterized in that** the expansion element (17) is formed in unipartite fashion from the first section (18) and the second section (19).

12. Expansion element according to Claim 11, **characterized in that** the material of the expansion element (17) is a thermoplastic elastomer.

13. Bearing arrangement having at least one rolling bearing (2, 3) and having a thermocompensation element (14) according to Claim 1, in which the rolling bearing (2) is formed from at least one axially displaceable bearing ring (6) and from rolling bodies (8) that roll on the bearing ring (6), **characterized in that** the thermocompensation element (14) is arranged axially as a counter bearing between the bearing ring (6) and a housing (4).

14. Bearing arrangement according to Claim 13, **characterized in that** the outer diameter of the thermocompensation element (14) does not exceed the outer diameter of the bearing ring (6).

15. Bearing arrangement according to Claim 13, **characterized in that** the axial length of the expansion element (17) in the assembled initial state is set to a value greater than 0.02 times the mean axial bearing spacing between the angular-contact bearings (2, 3) and less than or equal to 0.3 times the mean axial bearing spacing between the rolling bearings (2, 3).

**Revendications**

1. Elément de thermocompensation (14) comprenant au moins un élément extensible (17) encapsulé entre un premier profilé annulaire (15) et un deuxième profilé annulaire (16), le matériau de l'élément extensible (17) présentant au moins un coefficient de dilatation thermique qui est supérieur au coefficient de dilatation thermique du matériau constituant au moins l'un des profilés annulaires (15, 16), et les profilés annulaires (15, 16) s'enfichant axialement l'un dans l'autre le long d'un axe médian commun (11) de manière déplaçable axialement l'un par rapport à l'autre et de manière guidée radialement l'un contre l'autre de telle sorte que des parois annulaires orientées axialement (20, 21) du premier profilé annulaire (15) viennent en prise au moins en partie entre des parois annulaires (22, 23) orientées axialement du deuxième profilé annulaire (16) et en l'occurrence l'élément extensible (17) étant inclus au niveau d'une première portion (18) du côté périphérique au moins en partie par les parois annulaires (20, 21) du premier profilé annulaire (15), **caractérisé en ce que** l'élément extensible (17) présente une deuxième portion (19) qui est enserrée du côté périphérique au moins en partie par le deuxième profilé annulaire (16) de telle sorte que la deuxième portion (19) s'applique radialement contre les parois annulaires (22, 23) du deuxième profilé annulaire (16) et axialement contre les parois annulaires (20, 21) du premier profilé annulaire (15).

**2.** Elément de thermocompensation selon la revendication 1, **caractérisé en ce que** la deuxième portion (19) de l'élément extensible (17) est guidée radialement entre les parois annulaires (22, 23) du deuxième profilé annulaire (16) et est supportée axialement dans une direction au niveau du deuxième profilé annulaire (16).

**3.** Elément de thermocompensation selon la revendication 1 ou 2, **caractérisé en ce que** la première portion (18) guidée radialement entre les parois annulaires (20, 21) du premier profilé annulaire (15) est axialement sans contact avec le premier profilé annulaire (15).

**4.** Elément de thermocompensation selon la revendication 1, **caractérisé en ce que** la section transversale transversalement à la direction axiale de la deuxième portion (19) de l'élément extensible (17) est supérieure à la section transversale de la première portion (18).

**5.** Elément de thermocompensation selon la revendication 1, **caractérisé en ce que** les dimensions radiales de la deuxième portion (19) de l'élément extensible (17), là où la deuxième portion (19) est entourée du côté périphérique par les parois annulaires (22, 23) du deuxième profilé annulaire (16), sont supérieures aux dimensions radiales de la première portion (18) là où celle-ci est entourée du côté périphérique par les parois annulaires (20, 21) du premier profilé annulaire (15).

**6.** Elément de thermocompensation selon la revendication 5, **caractérisé en ce que** les dimensions radiales de la deuxième portion (19) correspondent au moins aux dimensions radiales de la première portion (18) entre les parois annulaires (20, 21) du premier profilé annulaire (15) plus le double de l'épaisseur de paroi radiale orientée dans le même sens ($t_i$) des parois annulaires (22, 23) du premier profilé annulaire (15).

**7.** Elément de thermocompensation selon la revendication 1, **caractérisé en ce que** l'épaisseur de paroi orientée radialement ($t_i$) des parois annulaires (20, 21) du premier profilé annulaire (15), au moins là où l'élément extensible (17) s'applique contre les premières parois annulaires (20, 21), est inférieure à l'épaisseur de paroi orientée dans le même sens ($t_a$) d'au moins l'une des parois annulaires (22, 23) du deuxième profilé annulaire (16) au moins là où l'élément extensible (17) s'applique contre les parois annulaires (22, 23) du deuxième profilé annulaire (16).

**8.** Elément de thermocompensation selon la revendication 7, **caractérisé en ce que** le rapport de l'épaisseur de paroi radiale ($t_i$) d'au moins l'une des parois annulaires respectives (20, 21) du premier profilé annulaire (15) à chaque fois sur l'épaisseur de paroi radiale ($t_a$) d'au moins l'une des parois annulaires (22, 23) du deuxième profilé annulaire (16) est inférieur ou égal à un rapport de 3:4.

**9.** Elément de thermocompensation selon la revendication 1, **caractérisé en ce que** la première portion (18) et la deuxième portion (19), au moins dans le profilé annulaire respectif (15, 16), sont serrées entre les parois annulaires respectives (20, 21, 22, 23) avec une précontrainte radiale.

**10.** Elément de thermocompensation selon la revendication 1, **caractérisé en ce que** la première portion (18) et le premier profilé annulaire (15) sont disposés axialement sans contact avec au moins une distance entre eux, dont le rapport à la dimension axiale de l'élément extensible (17) dans l'état de départ, au moins à des températures de l'élément de thermocompensation (14) de 20°C, est supérieur ou égal à zéro et inférieur à 0,02.

**11.** Elément extensible d'un élément de thermocompensation selon la revendication 1, **caractérisé en ce que** l'élément extensible (17) est réalisé d'une seule pièce à partir de la première portion (18) et de la deuxième portion (19).

**12.** Elément extensible selon la revendication 11, **caractérisé en ce que** le matériau de l'élément extensible (17) est un élastomère thermoplastique.

**13.** Agencement de palier comprenant au moins un palier à roulement (2, 3) et un élément de thermocompensation (14) selon la revendication 1, dans lequel le palier à roulement (2) est formé d'au moins une bague de palier (6) déplaçable axialement et de corps de roulement (8) roulant sur la bague de palier (6), **caractérisé en ce que** l'élément de thermocompensation (14) est disposé axialement en tant que butée entre la bague de palier (6) et un boîtier (4).

**14.** Agencement de palier selon la revendication 13, **caractérisé en ce que** le diamètre extérieur de l'élément de thermocompensation (14) ne dépasse pas le diamètre extérieur de la bague de palier (6).

**15.** Agencement de palier selon la revendication 13, **caractérisé en ce que** la longueur axiale de l'élément extensible (17) dans l'état de sortie monté est ajustée à une valeur supérieure à 0,02 fois la distance de palier axiale moyenne des palmiers obliques (2, 3) et inférieure ou égale à 0,3 fois la distance de palier axiale moyenne des paliers à roulement (2, 3) l'un par rapport à l'autre.

Fig.1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5028152 A
- US 5028152A A

- EP 0668448 A1
- DE 19833910 B4